# EUROPEAN PATENT SPECIFICATION

(11) **EP 3 013 546 B1**
(45) Date of publication and mention of the grant of the patent: **26.07.2017**
(21) Application number: 14735076.3
(22) Date of filing: 10.06.2014
(51) Int. Cl.: B29B 9/14, C08J 5/04, B29C 70/12

(54) **METHOD FOR MAKING A DISCONTINUOUS FIBER MOLDING COMPOUND**
VERFAHREN ZUR HERSTELLUNG EINER FORMMASSE AUS DISKONTINUIERLICHEN FASERN
PROCÉDÉ DE FABRICATION D'UN COMPOSÉ DE MOULAGE EN FIBRE DISCONTINUE

(30) Priority: 25.06.2013 US 201313926706
(43) Date of publication of application: 04.05.2016
(73) Proprietor: Hexcel Corporation, Dublin, CA 94568 (US)
(72) Inventor: BOURSIER, Bruno, Dublin, CA 94568 (US)
(74) Representative: Pols, Ronald Maarten
(86) International application number: PCT/US2014/041759
(87) International publication number: WO 2014/209601

(56) References cited:
- JP-A- H1 129 368
- US-A1- 2013 101 406

## Description

### BACKGROUND OF THE INVENTION

### 1. Field of the Invention

The present invention relates generally to molding compounds that are composed of discontinuous carbon fibers and a thermosetting and/or thermoplastic matrix resin according to claim 12 and to a method for making a discontinuous fiber molding compound according to claim 1. More. particularly, the invention involves using remnants of carbon fiber tows to make a discontinuous fiber molding compound.

### 2. Description of Related An

Composite materials include a fibrous reinforcement structure and a resin matrix as the two principal components. Composite materials typically have a rather high strength to weight ratio. As a result, composite materials are used in the aerospace industry where the high strength and relatively light weight of composite structures are of particular importance.

Carbon fibers are a popular fibrous reinforcement for composite materials. Carbon fibers are typically provided as a multifilamentary yarn that is commonly referred to as a "tow". Carbon fiber tows generally contain from 1,000 to 50,000 individual filaments. Commercially available carbon tows contain, for example, approximately 3000 filaments (3K), 6000 filaments (6K), 12000 (12K) filaments or 24000 (24K) filaments. A single carbon filament generally has a linear weight that ranges from 0.02 to 0.5 milligrams per meter. The filaments in carbon fiber tows are not twisted in the same manner as conventional yarns. Instead, the filaments in a carbon fiber tow are substantially parallel to each other.

Carbon fiber is supplied commercially as a spool or bobbin that contains a single continuous tow. The length of the carbon fiber tow can vary widely depending upon the linear weight of the filaments, the number of filaments in the tow and the overall weight of carbon fiber tow that is wound onto the spool. Typically, commercially available carbon fiber spools contain from 1 to 20 pounds (454 grams to 9080 grams) of a continuous carbon fiber tow that is from 4,000 to 15,000 meters long.

Carbon fiber tows from multiple spools are woven together to form carbon fiber fabric that is later combined with a resin matrix to form a composite material. Carbon fiber tows are also fed from multiple spools to make unidirectional (UD) fibrous reinforcement, such as UD tape, which is also combined with resin matrix to form a composite material. At some point during the weaving or UD tape production process, the amount of carbon fiber tow left in the spools becomes so small that the spent spools must be replaced with new ones.

The remnant of carbon fiber tow remaining on a spent spool is insufficient for further use in making woven fabric or UD tape. In practice, the remnant of carbon fiber tow that remains on a spent spool will vary in length depending upon the weaving process, the type of fiber reinforcement being made, the linear weight of the filaments and the number of filaments in the tow. Over a period of time, the amount of carbon fiber tow remnants that are generated can be substantial.

It would be desirable to take the remnants of carbon fiber tows that are generated during the production of woven fabric or UD tape and use the remnants to make a useful product.

JPH1129368 discloses a method for forming carbon fibers coated with resin, said method comprising loosening the carbon fibers and mixing them with powdered resin in a mixing chamber to coat the fibers, depositing the coated fibers on a flat mesh, and hot pressing the deposited coated fibers.

### SUMMARY OF THE INVENTION

In accordance with the present invention, it was discovered that the remnants of carbon fiber tows that remain on spent spools of carbon fiber can be used to make a discontinuous fiber molding compound. The molding compound can be used for molding both simple and complex shapes that have relatively good mechanical properties.

The present invention involves a method for making a discontinuous fiber molding compound from remnants of carbon fiber tows. The method includes the step of providing a spent carbon fiber spool that contains a remnant of carbon fiber tow. The remnant of carbon fiber tow is too short to be used for making a woven or unidirectional fibrous structure. As a feature of the invention, the remnant of carbon fiber tow is removed from the spool and chopped into pieces to form an assembly of chopped carbon fiber tows that are from 1 cm to 10 cm long.

As a further feature of the invention, a powdered thermosetting or thermoplastic resin is mixed with the assembly of chopped carbon fiber tows to form a blend of fibers and powder. The blend is then heated to a sufficient temperature for a sufficient time to adhere the particles of resin to the chopped carbon fiber tows to stabilize the filaments in the chopped tows and form the discontinuous fiber molding compound. This discontinuous fiber molding compound may be used in the same manner as known composite molding compounds to make both simple and complex parts.

As a feature of the invention, it was discovered that discontinuous fiber molding compound made from remnants of 3K carbon fiber tow can be molded into composite parts that are stronger and more damage resistant than composite parts molded from discontinuous fiber molding compound made using remnants of carbon fiber tows that are 6K or greater. The discontinuous fiber molding compound made from remnants of 3K carbon fiber tows can be molded into composite parts that have strength and damage resistance properties that approach those of composite parts made from existing commercially available high performance discontinuous fiber molding compounds, such as HexMC® molding compound (Hexcel Corporation, Dublin CA). Accordingly, the discontinuous fiber molding compounds of the present invention that are made using tows having relatively low numbers of filaments are useful as a low-cost alternative to commercially available high performance molding compounds.

As a further feature of the present invention, it was discovered that discontinuous fiber molding compound made in accordance with the present invention could be molded into a stronger composite part when the remnant of carbon fiber tows were chopped into relatively long (5 to 10 cm) chopped fiber tows. The combination of relatively low filament count (3K) and relatively high chopped fiber tow length (5 to 10 cm) was found to provide a particularly useful molding compound that could be used to form composite parts having tensile strengths of well over 300 MPa.

The above described and many other features and attendant advantages of the present invention will become better understood by reference to the following detailed description when taken in conjunction with the accompanying drawing.

### BRIEF DESCRIPTION OF THE DRAWINGS

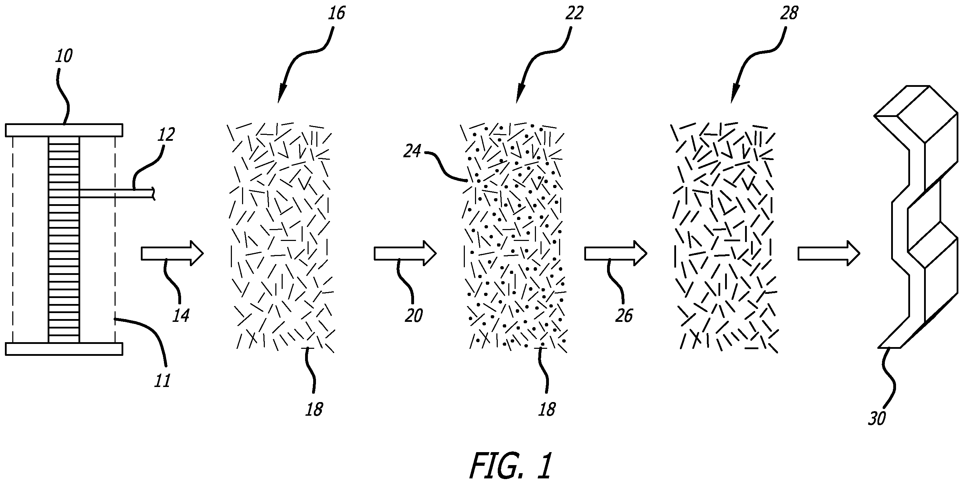

FIG. 1 is a diagrammatic representation of an exemplary method in accordance with the present invention for taking an unusable remnant of carbon fiber tow and making it into a useful discontinuous fiber molding compound.

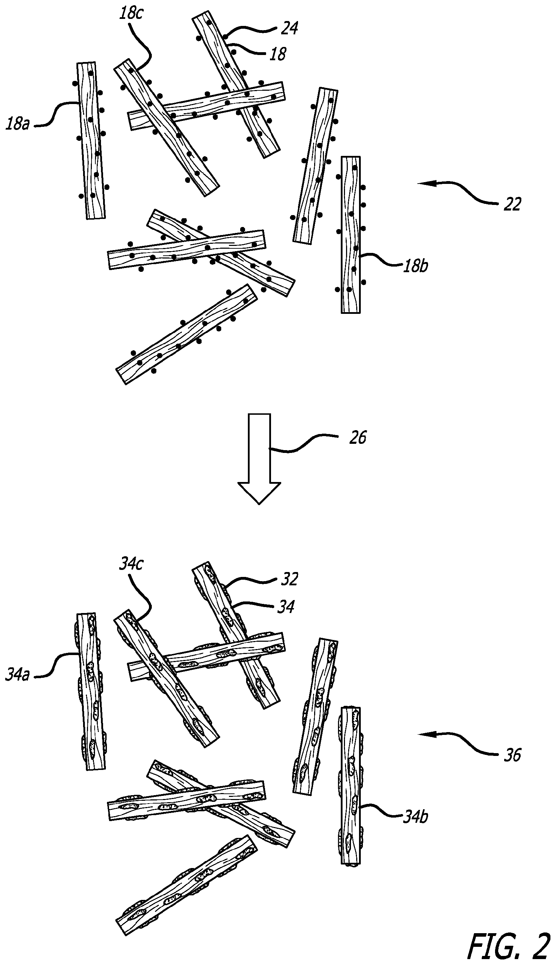

FIG. 2 is a magnified and simplified view of a minute portion of the chopped carbon fiber tows and resin particles prior to and after the heating step that is required to form molding compounds in accordance with the present invention. FIG. 2 demonstrates how resin particles that are attached by electrostatic attraction to a few of the chopped carbon fiber tows soften or melt during the heating step to form an assembly of individual chopped carbon fiber tows that are stabilized by the resin particles which have been thermally bonded to the tows.

### DETAILED DESCRIPTION OF THE INVENTION

The present invention provides a way to take remnants of carbon fiber tows and convert them into relatively low-cost discontinuous molding compounds. The molding compounds may be used in a wide variety of situations where a versatile composite material molding compound is required. For example, the molding compound of the invention may be used in the same manner as commercially available high performance discontinuous molding compounds, such as HexMC® molding compound (Hexcel Corporation, Dublin CA), which is composed of chopped pieces of UD tape and resin matrix. Molding compounds that are made from chopped pieces of UD tape and resin matrix are described in U.S. Pat. No. 8366046 and published U.S. Published Appl. Nos. 2012-0040169 and 2013-0101406. The molding compound of the present invention may be viewed as a low-cost alternative to medium and high performance molding compounds.

A diagrammatic representation of an exemplary preferred method in accordance with the present invention is shown in FIG. 1. Initially, the method involves providing spent carbon fiber spools 10 that contain a remnant of carbon fiber tow 12. Such spent carbon fiber spools are generated during the weaving of carbon fiber fabric or the production of carbon fiber UD tape. The initial spools that are loaded into the weaving system or UD tape production line are full of carbon fiber tow as shown in phantom at 11.

Full spools of carbon fibers are commercially available, for example, from Hexcel Corporation (Dublin, CA) under the trade name HexTow®. Some examples of full spools are: 1) a spool containing 1816 grams of AS2C 3K carbon fiber tow weighing 0.200 g/m and having a density of 1.80 g/cm³; 2) a spool containing 1816 grams AS4 3K carbon fiber tow weighing 0.210 g/m and having a density of 1.79 gm³; 3) a spool containing 1816 grams of AS4 6K carbon fiber tow weighing 0.427 g/m and having a density of 1.79 g/cm³; 4) a spool containing 3632 grams AS4 carbon 12K carbon fiber tow weighing 0.858 g/m and having a density of 1.79 gm³; 5) a spool containing 1816 grams of AS4C 3K carbon fiber tow weighing 0.200 g/m and having a density of 1.78 g/cm³; 6) a spool containing 1816 grams AS4C 6K carbon fiber tow weighing 0.400 g/m and having a density of 1.78 gm³; 7) a spool containing 3632 grams of AS4C 12K carbon fiber tow weighing 0.800 g/m and having a density of 1.80 g/cm³; 8) a spool containing 3632 grams AS4D 12K carbon fiber tow weighing 0.765 g/m and having a density of 1.79 gm³; 9) a spool containing 3632 grams of AS7 12K carbon fiber tow weighing 0.800 g/m and having a density of 1.80 g/cm³; 10) a spool containing 908 grams IM2A 6K carbon fiber tow weighing 0.223 g/m and having a density of 1.78 gm³; 11) a spool containing 1816 grams of IM2A 12K carbon fiber tow weighing 0.446 g/m and having a density of 1.78 g/cm³; 12) a spool containing 1816 grams IM2C 12K carbon fiber tow weighing 0.446g/m and having a density of 1.78 gm³; 13) a spool containing 1816 grams of IM6 12K carbon fiber tow weighing 0.446 g/m and having a density of 1.78 g/cm³; 14) a spool containing 908 grams IM7 6K carbon fiber tow weighing 0.223 g/m and having a density of 1.78 gm³; 15) a spool containing 1816 grams of IM7 12K carbon fiber tow weighing 0.446 g/m and having a density of 1.78 g/cm³; 16) a spool containing 1816 grams AS4D 12K carbon fiber tow weighing 0.446 g/m and having a density of 1.79 gm³; 17) a spool containing 908 grams of IM9 12K carbon fiber tow weighing 0.335 g/m and having a density of 1.80 g/cm³; 16) a spool containing 1816 grams IM10 12K carbon fiber tow weighing 0.224 g/m and having a density of 1.79 gm³.

In order to qualify as a "spent carbon fiber spool", the spool or bobbin must contain a remnant of carbon fiber tow. A remnant of carbon fiber tow is the remnant of a much longer tow and typically the remnant of the carbon fiber tow that is present in a full spool. The remnant of carbon fiber tow has a length that is too short for the tow to be useful in making woven or unidirectional fibrous structures. For example, in order to be considered a remnant of carbon fiber tow in many situations, the length of the remnant should be less than 500 meters and preferably less than 250 meters. In another example, any spool of carbon fiber tow that has been used in a production process and then removed from service is also considered to be a spent spool that contains a remnant of carbon fiber tow.

In one example, a spool of carbon fiber may be weighed in order to determine if it qualifies as a spent spool. The spool is considered to be a spent spool if the weight of carbon fiber tow remaining on the spool corresponds to a length of less than 500 meters. The linear weight of the carbon fiber tow can be used to calculate the length of the tow present in the full spool as well as the length of the remnant remaining in the spent spool. For example, if the carbon fiber tow weighs 0.200 g/m and the full spool contains 2000 grams of carbon fiber tow, then the length of the initial tow is 10,000 meters (5 m/g x 2000 g). The spool is considered to be a spent spool when less than 100 grams of carbon fiber tow remains on the spool. By calculation (5 m/g x 100 g), the remnant remaining on the spent spool is less than 500 meters long.

Specific examples of the weight of spent spools that contain tows which are considered to be remnant carbon fiber tows are as follows: 1) the length of the tow in a full spool (1816 grams) of AS4C 3K carbon fiber is 9080 meters (5m/g x 1816g) and the spool is considered to be spent when the tow remaining in the spool weighs less than 100 g (5 m/g x 100 g = 500 meters); 2) the length of the tow in a full spool (1816 grams) of AS4C 6K carbon fiber is 4540 meters (2.5m/g x 1816 g) and the spool is considered to be spent when the tow remaining in the spool weighs less than 200 g (2.5 m/g x 200g = 500 meters); and 3) the length of the tow in a full spool (3632 grams) of AS4C 12K carbon fiber is 4540 meters (1.25m/g x 3632g) and the spool is considered to be spent when the tow remaining in the spool weighs less than 400 g (1.25 m/g x 400g = 500 meters).

It may be necessary to remove a spool from the weaving or pre-impregnation production line when more than 500 meters of the initial carbon fiber tow is left on the spool. For example, a spool may be removed at an early stage if it is shorter than the other spools needed to produce a UD tape or fabric reinforcement as it would require a time consuming splice of the spool to match the fiber lengths of the other spools. These spools are also considered to be spent spools, since they are not suitable for return to the production line. In addition, there may be situations where full spools of carbon tow are used alone or as a supplemental source of carbon tows that are used to form the molding compound. The use of full spools of carbon fiber tow as a source for chopped tows is a costly alternative. Accordingly, the use of full spools of carbon fiber tows is preferably limited to those situations where the supply of remnant carbon fiber tows is not sufficient to meet product specification or production demands. The amount of carbon fiber tows in the molding compound that are not from spent spools of carbon fiber tows is preferably kept below 20 weight percent of the tows present in the molding compound and preferably below 10 weight percent. Most preferred are molding compounds where remnant carbon fiber tows make tip 98 weight percent or more of the total carbon fiber tows present in the molding compound.

As represented by arrow 14, the remnant of carbon fiber tow 12 is removed from the spent spool 10 and chopped to form an assembly 16 of chopped carbon fiber tows 18 that are from 1 cm to 10 cm long. The chopping operation may be conducted using any of the known methods for cutting carbon fiber tows. Such methods include mechanical cutting and or slicing using an ultrasonic knife. Ultrasonic cutting methods are preferred. The tow may be spread prior to cutting, if desired. Methods for spreading tows are known in the art.

The assembly 16 of chopped carbon fiber tows 18 is then mixed with a powdered thermosetting resin, as represented by arrow 20, to form a blend 22 of chopped carbon fiber tows 18 and powdered thermosetting resin particles 24. The resin can be any of the powdered thermosetting or thermoplastic resins that are solid at room temperature and typically used to make composite materials. Mixtures of thermosetting resins and thermoplastic resins may be used including epoxy resins that are toughened with thermoplastics. The powdered thermosetting resins are preferably fully formulated resins that include curing agents, accelerators, catalysts and any desired additives. Exemplary resins include epoxy resins, polyester resins, bismaleimide resins and diallylisocyanurate resins.

Epoxy resins that are solid at room temperature are preferred for use as the powdered thermosetting resin. For example cresol novolac epoxy resins and epoxy resins based on the reaction of epichlorohydrin and bisphenol A (bisphenol A epoxy) that are solid at room temperature are suitable. Particularly preferred are blends of cresol novolac epoxy resins and bisphenol A epoxy that are cured with dicyandiamide or an equivalent curative agent. The cresol novolac epoxy should make up at least 50 weight percent of the powdered resin. Preferred cresol novolac epoxy resins are those made from ortho cresolformaldehyde novolac which is reacted with epichlorohydrin to form the novolac epoxy resin. The molecular weight of the novolac epoxy resin is preferably between 1000 and 1500. The molecular weight of the bisphenol A epoxy resin is also preferably between 1000 and 1500.

The powdered thermosetting resin should be composed of particles that range in size from a few microns up to 150 microns. The powders preferably contain particle distributions such that at least 50 percent of the particles have a particle sizes that are less than 50 microns and at least 90 percent of the particles have particle sizes that are less than 100 microns. The resin powder should be free flowing at ambient temperatures so that it can be mixed uniformly with the chopped tows. The resin particles should not stick to each other in order to avoid the formation of undesirable agglomerates during mixing of the chopped fibers with the powdered resin.

In a preferred embodiment, the glass transition temperature (Tg) of cured epoxy resins is increased by adding a small amount (10 weight percent or less) of a multifunctional epoxy to the resin. The multifunctional epoxy increases cross linking of the resin during curing which causes the Tg of the cured resin to increase. Such multifunctional epoxy resins are typically liquid at room temperature. Accordingly, the multifunctional epoxy is preferably pre-mixed with the solid epoxy resin(s) and then ground to form the powder that is mixed with the chopped tows. Any multifunctional epoxy may be used provided that it increases cross linking of the resin during curing so as to increase the Tg and also provided that it can be combined with the solid resins to form a powdered final resin. Tetrafunctional epoxy resins, such as tetraglycidyl methylene dianiline (TGMDA), are preferred.

Any number of different epoxy resins may be used to make the powdered thermosetting resin that is applied to the chopped remnant tows. However, a preferred powdered thermosetting resin is a blend of solid bisphenol A epoxy and cresol novolac epoxy in combination with a liquid tetrafunctional epoxy. Dicyandiamide is the preferred curing agent with urone or diurone being added as a catalyst. The dicyandiamide should be in the form of a powder having particle sizes that are equal to or smaller than the epoxy resin particle sizes. Dicyandiamide powders having particle sizes in the range of 1 micron to 10 microns are preferred. Difunctional urones (diurone) are the preferred urone catalyst. The diurone should also be in the form of a powder having particle sizes that are equal to or smaller than the epoxy resin particle sizes. Diuron powders having particle sizes that are also in the range of 1 micron to 10 microns are preferred.

Preferred powdered thermosetting resins will contain: 10 to 40 weight percent solid bisphenol A epoxy; 50 to 80 weight percent cresol novolac epoxy; 2-10 weight percent liquid tetrafunctional epoxy, such as TGMDA; 0.5 to 4 weight percent dicyandiamide curing agent; and 1 to 6 weight percent diurone catalyst. As mentioned above, the liquid TGMDA is pre-mixed with the other two solid epoxy resins to form a resin blend that is ground to the desired particle sizes. This powdered epoxy blend is then combined with the particulate curing agent and catalyst to form the final thermosetting powder that is then mixed with the chopped carbon fiber tows.

The powdered resin 24 and chopped carbon fiber tows 18 are mixed together using any type of blending apparatus that provides intimate mixing of the chopped carbon fiber tows and powdered resin without disrupting the tows. Drum-type blenders are preferred in which the chopped tows and fibers are gently agitated as the drum is rotated. It is preferred that the chopped carbon fiber tows and powdered resin are fed as a batch into the drum blender and mixed to form a batch of blended chopped carbon fiber tows and powdered thermosetting resin. Continuous flow mixing systems may also be used provided that the chopped fibers and powdered resin are intimately mixed together without disrupting the tow structure. During the mixing or blending process, the powdered resin particles become adhered by static electricity to the filaments of the chopped carbon fiber tows. As a result, the particles of resin are uniformly distributed and attached to the carbon fiber tow pieces during the mixing step. The static electrical attraction between the particles and tows ensures that the resin particles remain attached to the chopped tows and not to each other. As a result, the powder particles remain uniformly dispersed throughout the blend 22 when mixing is completed.

The next step in the method for making the discontinuous carbon fiber molding compound involves heating the blend 22 at a sufficient temperature for a sufficient time to provide softening or partial melting of the powdered resin particles. This heating/softening step stabilizes the carbon filaments in the tows by bonding the resin particles more securely to the filaments and by preventing any further disruption of the tows. The specific temperatures and heating times will vary depending upon the particular carbon fiber tow and resin being used as well as the size of the resin particles. The combination of heating temperature and times is chosen so that the resin particles soften or melt only enough to bond to the tows and stabilize the filaments. It is not necessary that the particles melt completely and flow into the carbon fiber tows. It is only required that the resin particles be melted sufficiently to bond to the tows and stabilize the tows against possible further filament disruption during handling, storage and molding. Temperatures that are sufficient to partially melt the resin particles and stabilize the tow filaments will typically range from 50 to 200°C depending upon the type of resin being used. Typical heating times will range from a few seconds to 2 minutes, once the target temperature has been reached. The time it takes to heat the blend 22 from room temperature to the target temperature should be kept to a minimum.

After the resin particles have been sufficiently softened or melted, the resin-coated chopped carbon fiber tows are cooled to room temperature or below to form the final molding compound 28. The heating/melting and cooling steps are represented by arrow 26 in FIG. 1. The discontinuous carbon fiber molding compound 28 is ready for use to be molded into a wide variety of composite parts 30. The resin should have little if any tack at room temperature. This makes handling and shaping of the molding compound easier than if the resin-chopped tow elements are tacky and stick together. The resin-chopped fiber tow elements should be separable into individual elements by gentle manipulation of the molding compound.

FIG. 2 depicts a magnified and simplified view of a minute portion of the blend 22 of chopped carbon tows 18 and resin particles 24. This figure demonstrates that the particles of resin 24 are attached to the surface of the tows 18 only by way of electrostatic attraction. During the heating step, as represented by arrow 26, the particles are softened or melted sufficiently so that they form resin areas 32 that are thermally bonded to the tows 34. This thermal bonding step stabilizes the filaments in the tow and prevents them from being disrupted during handling. In addition, thermal bonding of the resin particles to the tows prevents them from adhering to each other and forming undesirable agglomerates of the resin-carbon fiber tows elements. In order to form a useful molding compound, the individual resin-carbon fiber tow elements should be in the form of an assembly of separate elements as shown at 36 in FIG. 2.

The molding material 28 may be formed into any desired shape and molded according to known molding procedures for the particular type of resin and carbon fiber being used. Exemplary parts that can be molded using the molding compound of the present invention include brackets, connectors, clips and any structural part having a complex shape.

The type of carbon fibers that can be used to make molding compound in accordance with the present invention is only limited by the sources of remnant of carbon fibers that are available. In general, any of the commercially available carbon fiber types that are used in making high performance composite materials are suitable. Examples include AS2C, AS4, AS4C, AS4D, AS7, IM2A, IM2C, IM6, IM7, IM8, IM9 and IM10 carbon fiber tows which are available from Hexcel Corporation (Dublin, CA).

More than one type of remnant of carbon fiber tow may be used to make a particular molding compound. This is especially useful in situations where a number of spent spools of different types of remnant of carbon fiber tows are available for salvaging. It was found that exemplary molding compounds that contained a mixture of different types of carbon fiber tows produced molded composite parts that reflected the combined of properties of the different fiber tows. In addition, molding compounds can be made that include mixtures of tows having different number of filaments and different tow lengths.

For example, as shown in FIG. 2, a molding compound is being made in which at least four different types of remnant carbon fiber tows are used as represented by chopped carbon fiber tows 18, 18a, 18b, 18c and resin-chopped fiber tow elements 34, 34a, 34b and 34c. The use of different remnants of carbon fiber tows allows one to vary and control the physical properties of the molded part. The properties of the molded part will vary depending upon the number of filaments in the chopped tows, the length of the tows and the type of carbon fiber in the chopped tows. Accordingly, various combinations of remnant carbon fiber tows can be chosen to make molded products that have a wide range of physical properties.

The amount of thermosetting resin powder that is mixed with the chopped carbon fiber tows may be varied to meet different product demands. For high performance discontinuous carbon fiber molding compounds, the amount of thermosetting resin powder should be from 30 to 50 weight percent of the total molding compound. Preferred high performance discontinuous carbon fiber molding compound should contain from 33 to 43 weight percent of the total molding compound.

Molding of the discontinuous carbon fiber molding compounds of the present invention can be carried out according to known molding procedures for other high performance molding compounds, such as HexMC® molding compound. The uncured discontinuous carbon fiber molding compound is placed in a mold that is typically composed of two mold halves and formed into the desired shape. Once formed in the mold, the uncured composite assembly is heated to the curing temperature of the resin(s) and molded at under pressure to form the desired composite part or structure. Typical curing temperatures for powdered epoxy resins range from 140°C to 225°C. Preferred curing temperatures range from 140°C to 190°C. Internal pressures within the mold can vary from slightly above atmospheric pressure to 13,8 MPa (2000 psi). High pressure molding is preferred for making high performance composite parts. Such high pressure molding is carried out at pressures that are above 3,45 MPa (500 psi) and below 13,8 MPa (2000 psi) at the cure temperatures. Once the uncured discontinuous carbon fiber molding compound has been completely cured (typically 5 minutes to 1 hour at curing temperature), the part is removed from the mold and cooled to form the final composite part.

Examples of practice are as follows:

### EXAMPLE 1

Groups of AS4C carbon fiber tows having 3K, 6K and 12K filaments were chopped into pieces using an ultrasonic knife. The carbon fiber tows were chopped into pieces of tow that were either about 2.5 cm or about 5 cm long. The carbon fiber tows were either AS4 fiber grade CP3000 or AS4 fiber grade CP4000 (Hexcel Corporation - Dublin, CA). Linear weight of the 3K tows was 0.200 g/m with the linear weight of the 6K and 12K tows being 0.400 g/m and 0.800 g/m, respectively. The term "about", when used in this specification is equal to the stated value plus or minus 5 percent.

Each group of chopped tow was mixed with a powdered epoxy resin in a rotary drum to provide blends of chopped carbon fiber tows and powdered thermosetting resin that contained about 38 weight percent epoxy resin based on the total weight of the molding compound. The powdered epoxy resin contained a combination of: 17 weight percent solid bisphenol A epoxy resin; 71 weight percent cresol novolac epoxy resin; 5 weight percent liquid tetrafunctional epoxy resin (TGMDA); 2 weight percent dicyandiamide curing agent; and 3.5 weight percent urone accelerator. The liquid tetrafunctional epoxy was pre-mixed with the solid cresol novolac epoxy and formed into a powder prior to blending with the other powdered ingredients. This type of powdered epoxy resin blend has a softening point of between 60°C and 80°C.

Each blend of powder and chopped tows was heated rapidly to a temperature of about 110°C and held there for 30 seconds in order to partially melt the powder particles and allow them to adhere to the tows. After being at 110°C for 30 seconds, the blends were cooled to room temperature and formed into 30 cm x 30 cm sheets of discontinuous carbon fiber molding material.

The sheet of molding material was cured under 6,9 MPa (1000 psi) pressure at 160°C for 10 minutes. The resulting cured sheet was 4 mm thick. The cured sheet was then tested for tensile strength (MPa), tensile modulus (GPa), interlaminar shear strength (ILSS) and glass transition temperature (Tg). ILSS was determined by test method EN 2563 and Tg was determined by dynamic mechanical analysis (DMA). The results of the testing are set forth in TABLE 1.

**TABLE 1**

| Fiber type | Fiber grade | Chopped fiber length (mm) | Fiber size | Tensile strength (MPa) | Tensile modulus (GPa) | ILSS (Mpa) | Tg by DMA (°C) |
|---|---|---|---|---|---|---|---|
| AS4C GP | CP3000 | 25 | 3K | 291 | 36.5 | 48 | 129 |
| | | | 6K | 251 | 38 | 48 | 133 |
| | | | 12K | 195 | 35,7 | 35 | 124 |
| | | 50 | 3K | 320 | 36,5 | 52 | 136 |
| | | | 6K | 315 | 42,1 | 63 | 134 |
| | | | 12K | 227 | 36,7 | 40 | 124 |
| | CP4000 | 25 | 3K | 293 | 46 | 54 | 137 |
| | | | 6K | 227 | 35,4 | 43 | 117 |
| | | 50 | 3K | 383 | 45,1 | 57 | 128 |
| | | | 6K | 310 | 39,3 | 49 | 129 |

As can be seen from TABLE 1, the laminates made using 3K carbon tow pieces had substantially better tensile strength than the 6K and 12K laminates. In addition, the 5 cm carbon tow pieces had substantially better tensile strength than the 2.5 cm carbon tow pieces. Further, the laminates made with the combination of 3K tows and 5 cm tow lengths had particularly high tensile strengths.

### EXAMPLE 2

Ten laminates were made in the same manner as Example 1, except that the chopped 3K, 6K and 12K carbon fiber tows were combined in different proportions by weight to form discontinuous carbon fiber molding compounds that contained differing amounts of each type of tow ranging from 0 to 100 weight percent. All of the chopped pieces of carbon fiber tows were about 5 cm long and they were all made using AS4 Grade CP3000 carbon fiber tows. The composition in weight percent of the ten laminates is set forth in TABLE 2.

**TABLE 2**

| Laminate number | Laminate composition | | |
|---|---|---|---|
| | AS4C 3K CP3000 | AS4C 6K CP3000 | AS4C 12K CP3000 |
| 1 | 67 | 17 | 17 |
| 2 | 50 | 50 | 0 |
| 3 | 50 | 0 | 50 |
| 4 | 17 | 17 | 67 |
| 5 | 0 | 50 | 50 |
| 6 | 33 | 33 | 33 |
| 7 | 17 | 67 | 17 |
| 8 | 0 | 0 | 100 |
| 9 | 100 | 0 | 0 |
| 10 | 0 | 100 | 0 |

The ten laminates were cured in the same manner as Example 1 and tested for tensile strength and tensile modulus. The results are set forth in TABLE 3.

**TABLE 3**

| Laminate | Tensile Strength (MPa) | Tensile Modulus (GPa) |
|---|---|---|
| 1 | 249 | 39.7 |
| 2 | 319 | 45.0 |
| 3 | 239 | 35.7 |
| 4 | 258 | 39.9 |
| 5 | 236 | 37.8 |
| 6 | 278 | 42.5 |
| 7 | 289 | 44.2 |
| 8 | 258 | 41.4 |
| 9 | 348 | 40.4 |
| 10 | 253 | 41.1 |

As can be seen from TABLE 3, the laminates that contained 100 weight percent of 3K chopped carbon fiber tows or a combination of 50 weight percent 3K and 50 weight percent 6K chopped carbon fiber tows had tensile strengths (348 MPa and 319 MPa, respectively) that were significantly higher than the other laminates. The combination of about 50 weight percent 3K carbon fiber tows with about 50 weight percent 6 K carbon fiber tows provides an unusually good combination of high tensile strength (319 MPa) and high tensile modulus (45 GPa) that could not be achieved by using 3K, 6K or 12K tows alone or by using the other combinations of chopped carbon fiber tows which are set forth in Table 2.

### EXAMPLE 3

Three laminates were prepared and tested in the same manner as Example 1. The first laminate contained 100 weight percent AS4C GP 12K G3000 chopped carbon fiber tow pieces that were 5 cm long. The second laminate contained 100 weight percent IMA GS 12K (Hexcel Corporation - Dublin, CA) chopped carbon fiber tow pieces that were 5 cm long. The third laminate contained 50 weight percent of each of the carbon tow pieces used to make the first two laminates. The laminates were cured and tested in the same manner as Example 1. The test results are set forth in TABLE 4.

**TABLE 4**

| **Fiber type** | **Tensile strength (MPa)** | **Tensile modulus (GPa)** | **ILSS (Mpa)** |
|---|---|---|---|
| 100% AS4C GP 12K CP3000 | 213 | 43,5 | 53 |
| 50% AS4C GP 12K CP3000 + 50% IMA GS 12K | 255 | 46 | 46 |
| 100% IMA GS 12K | 303 | 48,6 | 50 |

As can be seen from Table 3, the type of remnant of carbon fiber tow used to make the discontinuous molding compound does have an effect on the mechanical properties of the molded composite material.

### EXAMPLE 3

Three laminates were prepared and tested in the same manner as Example 1. The first laminate contained 100 weight percent IMA GS 12K chopped carbon fiber tow pieces that were 5 cm long. The second laminate contained 100 weight percent IM9 GP 12K (Hexcel Corporation - Dublin, CA) chopped carbon fiber tow pieces that were 5 cm long. The third laminate contained 50 weight percent of each of the carbon tow pieces used to make the first two laminates. The laminates were cured and tested in the same manner as Example 1. The test results are set forth in TABLE 5.

**TABLE 5**

| **Fiber type** | **Tensile strength (MPa)** | **Tensile modulus (GPa)** | **ILSS (Mpa)** |
|---|---|---|---|
| 100% IMA GS 12K | 303 | 48,6 | 50 |
| 50% IMA GS 12K + 50% IM9 GP 12K | 322 | 49,4 | 50 |
| 100% IM9 GP 12K | 317 | 50 | 54 |

As can be seen from Table 5, 12K IMA and IM9 carbon fiber tows can be used to make discontinuous carbon fiber molding compound that produces composite parts with mechanical properties that are similar to those obtainable using discontinuous carbon fiber molding compound containing 100 percent 3K AS4 carbon fiber tows. It should be noted that discontinuous molding compound made using 3K IMA and/or IM9 carbon fiber tow pieces is expected to produce composite parts that have mechanical properties that are better than those obtainable using 12K IMA and/or IM9 carbon fiber tows.

Having thus described exemplary embodiments of the present invention, it should be noted by those skilled in the art that the within disclosures are exemplary only and that various other alternatives, adaptations and modifications may be made within the scope of the present invention. Accordingly, the present invention is not limited by the above-described embodiments, but is only limited by the following claims.

## Claims

1. A method for making a discontinuous fiber molding compound (36), said method comprising the steps of:
providing an assembly of chopped carbon fiber tows (18) that are from 1 cm to 10 cm long;
mixing a powdered thermosetting resin comprising particles of thermosetting resin (24) with said assembly of chopped carbon fiber tows to form a blend of chopped carbon fiber tows (18) and powdered thermosetting resin (24) wherein said particles are attached to said chopped carbon fiber tows by static electrical attraction; and
heating said blend of chopped carbon fiber (18) and particles of thermosetting resin (24) to a sufficient temperature for a sufficient time to partially melt said particles of thermosetting resin and adhere said particles (24) to said chopped carbon fiber tows (18); and
cooling said heated blend of chopped carbon fibers to form said discontinuous fiber molding compound which comprises discrete resin-chopped fiber tow elements (34) that comprise said carbon fiber tows with said particles adhered thereto.

2. A method for making a discontinuous fiber molding compound according to claim 1 wherein said chopped carbon fiber tows are from 5 - 10cm long.

3. A method for making a discontinuous fiber molding compound according to claim 1 or claim 2 wherein said carbon fiber tow comprises about 3,000 filaments.

4. A method for making a discontinuous fiber molding compound according to claim 3 wherein multiple carbon fiber tows are chopped to form said assembly of chopped carbon fiber tows and wherein each carbon fiber tow comprises filaments and wherein the numbers of filaments present in at least two of said carbon fiber tow is not the same.

5. A method for making a discontinuous fiber molding compound according to claim 4 wherein said multiple of carbon fiber tows comprise either about 3000 filaments or about 6000 filaments.

6. A method for making a discontinuous fiber molding compound according to claim 1 wherein said powdered thermosetting resin is an epoxy resin.

7. A method for making a discontinuous fiber molding compound according to claim 6 wherein said powdered thermosetting resin amounts to from 30 weight percent to 50 weight percent of the total weight of said molding compound.

8. A method for making a discontinuous fiber molding compound according to claim 1 wherein at least a portion of said chopped carbon fiber tows are made by chopping a remnant of carbon fiber tow into said chopped carbon fiber tows.

9. A method for making a discontinuous fiber molding compound according to claim 8 wherein said remnant of carbon fiber tow consists of about 3000 filaments.

10. A method for making a discontinuous fiber molding compound according to claim 6 wherein said powdered thermosetting resin has a softening point of between 60°C and 80°C..

11. A method for making a discontinuous fiber molding compound according to any of the preceding claims which includes the additional step of molding said discontinuous fiber molding compound (36) to form a composite part (30).

12. A discontinuous fiber molding compound (36) that is made according to the method of claim 1.

## Patentansprüche

1. Verfahren zum Herstellen einer diskontinuierlichen Faser-Formmasse (36), wobei das Verfahren die Schritte umfasst:
Bereitstellen einer Gruppe von geschnittenen Kohlenstofffasersträngen (18), die von 1 cm bis 10 cm lang sind;
Mischen eines pulverförmigen wärmehärtbaren Harzes, das Partikel aus wärmehärtbarem Harz (24) umfasst, mit der Gruppe von geschnittenen Kohlenstofffasersträngen, um ein Gemisch von geschnittenen Kohlenstofffasersträngen (18) und pulverförmigem wärmehärtbarem Harz (24) zu bilden,
wobei die Partikel durch statische elektrische Anziehung an die geschnittenen Kohlenstofffaserstränge gebunden sind; und
Erhitzen des Gemischs von geschnittener Kohlenstofffaser (18) und Partikeln von wärmehärtbarem Harz (24) auf eine ausreichende Temperatur für eine ausreichende Zeit, um die Partikel von wärmehärtbarem Harz teilweise zu schmelzen und die Partikel (24) an die geschnittenen Kohlenstofffaserstränge (18) anzuhaften; und Abkühlen des erhitzten Gemischs von geschnittenen Kohlenstofffasern, um die diskontinuierliche Faser-Formmasse zu bilden, die diskrete Harz/geschnittene-Faserstrang-Elemente (34) umfasst, die die Kohlenstofffaserstränge mit den daran haftenden Partikeln umfassen.

2. Verfahren zum Herstellen einer diskontinuierlichen Faser-Formmasse gemäß Anspruch 1, wobei die geschnittenen Kohlenstofffaserstränge 5-10 cm lang sind.

3. Verfahren zum Herstellen einer diskontinuierlichen Faser-Formmasse gemäß Anspruch 1 oder Anspruch 2, wobei der Kohlenstofffaserstrang etwa 3.000 Filamente umfasst.

4. Verfahren zum Herstellen einer diskontinuierlichen Faser-Formmasse gemäß Anspruch 3, wobei mehrere Kohlenstofffaserstränge geschnitten werden, um die Gruppe von geschnittenen Kohlenstofffasersträngen zu bilden, und wobei jeder Kohlenstofffaserstrang Filamente umfasst und wobei die Zahl von Filamenten, die in wenigstens zwei der Kohlenstofffaserstränge vorhanden sind, nicht gleich ist.

5. Verfahren zum Herstellen einer diskontinuierlichen Faser-Formmasse gemäß Anspruch 4, wobei die mehreren Kohlenstofffaserstränge entweder etwa 3.000 Filamente oder etwa 6.000 Filamente umfassen.

6. Verfahren zum Herstellen einer diskontinuierlichen Faser-Formmasse gemäß Anspruch 1, wobei das pulverförmige wärmehärtbare Harz ein Epoxyharz ist.

7. Verfahren zum Herstellen einer diskontinuierlichen Faser-Formmasse gemäß Anspruch 6, wobei das pulverförmige wärmehärtbare Harz von 30 Gewichtsprozent bis 50 Gewichtsprozent des Gesamtgewichts der Formmasse bildet.

8. Verfahren zum Herstellen einer diskontinuierlichen Faser-Formmasse gemäß Anspruch 1, wobei wenigstens ein Teil der geschnittenen Kohlenstofffaserstränge durch Schneiden eines Kohlenstofffaserstrang-Rests zu den geschnittenen Kohlenstofffasersträngen hergestellt wird.

9. Verfahren zum Herstellen einer diskontinuierlichen Faser-Formmasse gemäß Anspruch 8, wobei der Kohlenstofffaserstrang-Rest aus etwa 3.000 Filamenten besteht.

10. Verfahren zum Herstellen einer diskontinuierlichen Faser-Formmasse gemäß Anspruch 6, wobei das pulverförmige wärmehärtbare Harz einen Erweichungspunkt von zwischen 60 °C und 80 °C aufweist.

11. Verfahren zum Herstellen einer diskontinuierlichen Faser-Formmasse gemäß einem der vorstehenden Ansprüche, umfassend den zusätzlichen Schritt des Formens der diskontinuierlichen Faser-Formmasse (36), um einen Verbundstoffgegenstand (30) herzustellen.

12. Diskontinuierlichen Faser-Formmasse (36), die gemäß dem Verfahren gemäß Anspruch 1 hergestellt ist.

## Revendications

1. Procédé pour la fabrication d'un mélange à mouler (36) contenant des fibres discontinues, ledit procédé comprenant les étapes consistant à :
fournir un ensemble de câbles de fibres de carbone coupés (18) qui ont une longueur de 1 cm à 10 cm ;
mélanger une résine thermodurcissable en poudre comprenant des particules de résine thermodurcissable (24) avec ledit ensemble de câbles de fibres de carbone coupés pour former un mélange de câbles de fibres de carbone coupés (18) et de résine thermodurcissable en poudre (24), lesdites particules étant fixées auxdits câbles de fibres de carbone coupés par attraction électrostatique ; et
chauffer ledit mélange de fibre de carbone coupé (18) et de particules de résine thermodurcissable (24) à une température suffisante pendant une durée suffisante pour faire fondre en parties lesdites particules de résine thermodurcissable et faire adhérer lesdites particules (24) auxdits câbles de fibres de carbone coupés (18) ; et
refroidir ledit mélange chauffé contenant des fibres de carbone coupées pour former ledit mélange à mouler contenant des fibres discontinues qui comprend des éléments discrets (34) résine-câbles de fibres coupés qui comprennent lesdits câbles de fibres de carbone auxquels lesdites particules ont adhéré.

2. Procédé pour la fabrication d'un mélange à mouler contenant des fibres discontinues selon la revendication 1 dans lequel lesdits câbles de fibres de carbone coupés ont une longueur de 5-10 cm.

3. Procédé pour la fabrication d'un mélange à mouler contenant des fibres discontinues selon la revendication 1 ou la revendication 2 dans lequel ledit câble de fibres de carbone comprend environ 3000 filaments.

4. Procédé pour la fabrication d'un mélange à mouler contenant des fibres discontinues selon la revendication 3 dans lequel de multiples câbles de fibres de carbone sont coupés pour former ledit ensemble de câbles de fibres de carbone coupés et dans lequel chaque câble de fibres de carbone comprend des filaments et dans lequel les nombres de filaments présents dans au moins deux desdits câbles de fibres de carbone ne sont pas les mêmes.

5. Procédé pour la fabrication d'un mélange à mouler contenant des fibres discontinues selon la revendication 4 dans lequel lesdits multiples câbles de fibres de carbone comprennent soit environ 3000 filaments soit environ 6000 filaments.

6. Procédé pour la fabrication d'un mélange à mouler contenant des fibres discontinues selon la revendication 1 dans lequel ladite résine thermodurcissable en poudre est une résine époxyde.

7. Procédé pour la fabrication d'un mélange à mouler contenant des fibres discontinues selon la revendication 6 dans lequel ladite résine thermodurcissable en poudre représente de 30 pour cent en poids à 50 pour cent en poids du poids total dudit mélange à mouler.

8. Procédé pour la fabrication d'un mélange à mouler contenant des fibres discontinues selon la revendication 1 dans lequel au moins une partie desdits câbles de fibres de carbone coupés sont formés en coupant un reste de câble de fibres de carbone en lesdits câbles de fibres de carbone coupés.

9. Procédé pour la fabrication d'un mélange à mouler contenant des fibres discontinues selon la revendication 8 dans lequel ledit reste de câble de fibres de carbone est constitué d'environ 3000 filaments.

10. Procédé pour la fabrication d'un mélange à mouler contenant des fibres discontinues selon la revendication 6 dans lequel ladite résine thermodurcissable en poudre a un point de ramollissement compris entre 60 °C et 80 °C.

11. Procédé pour la fabrication d'un mélange à mouler contenant des fibres discontinues selon l'une quelconque des revendications précédentes qui comprend l'étape supplémentaire consistant à mouler ledit mélange à mouler (36) contenant des fibres discontinues pour former une pièce composite (30).

12. Mélange à mouler (36) contenant des fibres discontinues qui est fabriqué selon le procédé de la revendication 1.
